# EUROPEAN PATENT APPLICATION

(11) **EP 4 290 644 A1**
(43) Date of publication of application: **13.12.2023**
(21) Application number: 22177478.9
(22) Date of filing: 07.06.2022
(51) Int. Cl.: H01M 10/42, H01M 10/48, H02J 7/00, H04B 3/54, B60L 58/18

(54) **BATTERY MANAGEMENT COMMUNICATION SYSTEM**

(71) Applicant: NXP USA, Inc., Austin TX 78735 (US)
(72) Inventor: Ully,, Klaus, 5656 AG Eindhoven (NL)
(74) Representative: Schmütz, Christian Klaus Johannes

(57) **Abstract**

A battery management communication system comprising:
a control unit configured to receive information from each of a plurality of battery cells, and generate instructions to control the battery cells;
a plurality of segment communication units comprising at least a first and a second segment communication unit;
the first segment communication unit is configured to provide for communication between the control unit and a first cell group; and
wherein the second segment communication unit is configured to provide for communication between the control unit and a second cell group; and
a main communication unit configured to couple to the control unit and the plurality of segment communication units;
wherein said information and instructions are routed through the main communication unit and appropriate segment communication unit.

## Description

### Field

The present disclosure relates to battery management communication system. In particular it relates to a battery management communication system for providing communication with a series connected plurality of battery cells.

### Background

A battery management communication system may provide for the transport of information messages between a plurality of battery cells and a control unit.

### Summary

According to a first aspect of the present disclosure there is provided a battery management communication system comprising:
a control unit configured to receive information from each of a plurality of battery cells, the battery cells configured to be coupled together in series, and wherein the control unit is further configured to generate instructions to control the plurality of battery cells;
a plurality of segment communication units comprising at least a first segment communication unit and a second segment communication unit;
wherein the first segment communication unit is configured to provide for communication between the control unit and a first cell group, the first cell group comprising two or more of the plurality of battery cells and wherein the first segment communication unit is configured to receive the information from and provide the instructions to at least one battery charge controller configured to individually control the charge of, and collect said information from, said two or more of the plurality of battery cells in the first cell group; and
wherein the second segment communication unit is configured to provide for communication between the control unit and a second cell group, the second cell group comprising two or more of the plurality of battery cells different to those of the first cell group and wherein the first segment communication unit is configured to receive the information from and provide the instructions to at least one battery charge controller configured to individually control the charge of, and collect said information from, said two or more of the plurality of battery cells in the second cell group; and
a main communication unit configured to couple to the control unit and the plurality of segment communication units;
wherein said information from each of a plurality of battery cells is configured to be received by the control unit:
   from the at least one battery charge controller of the first cell group via the first segment communication unit and the main communication unit; and
   from the at least one battery charge controller of the second cell group via the second segment communication unit and the main communication unit; and
   wherein said instructions configured to be generated by the control unit are:
      provided to the at least one battery charge controller of the first cell group via the main communication unit and the first segment communication unit; and
      provided to the at least one battery charge controller of the second cell group via the main communication unit and the second segment communication unit.

In one or more examples, the at least one battery charge controller of the first cell group and the at least one battery charge controller of the second cell group are part of the battery management communication system. In other examples, the at least one battery charge controller of the first cell group and the at least one battery charge controller of the second cell group are part of the plurality of battery cells that couple to the battery management communication system.

In one or more embodiments, the first segment communication unit includes a first set of communication lines to communicate with said at least one battery charge controller of the first group, said first set of communication lines coupled, respectively, to a first-group-positive node and a first-group-negative node, wherein the first-group-positive node is configured to couple to a positive power output terminal of the first group of battery cells and wherein the first-group-negative node is configured to couple to a negative power output terminal of the first group of battery cells; and
wherein the second segment communication unit includes a first set of communication lines to communicate with said at least one battery charge controller of the second group, said first set of communication lines configured to couple, respectively, to a second-group-positive node and a second-group-negative node, wherein the second-group-positive node is configured to couple to a positive power output terminal of the second group of battery cells and wherein the second-group-negative node is configured to couple to a negative power output terminal of the second group of battery cells.

In one or more embodiments, the at least one battery charge controller of the first group comprises a plurality of battery charge controllers, each of which being integrated with a respective one of the battery cells of the first group, and wherein the first segment communication unit is configured to communicate with said plurality of battery charge controllers via the first set of communication lines;
wherein the at least one battery charge controller of the second group comprises a plurality of battery charge controllers, each of which being integrated with a respective one of the battery cells of the second group, and wherein the second segment communication unit is configured to communicate with said plurality of battery charge controllers via the first set of communication lines.

Thus, in this embodiment, the first segment communication unit is configured to couple, in parallel, to the first group of series-connected, contiguous, battery cells and communicate with the battery charge controllers of said cells by power line communication. Likewise, in this embodiment, the second segment communication unit is configured to couple, in parallel, to the second group of series-connected, contiguous, battery cells and communicate with the battery charge controllers of said cells by power line communication.

In one or more embodiments, the at least one battery charge controller of the first group comprises a single battery charge controller having connections to positive and negative terminals of each of the battery cells of the first group; and
wherein the at least one battery charge controller of the second group comprises a single battery charge controller having connections to positive and negative terminals of each of the battery cells of the second group; and
wherein communication between the single battery charge controller of the first group and the first segment communication unit is via said first set of communication lines of the first segment communication unit; and
wherein communication between the single battery charge controller of the second group and the second segment communication unit is via said first set of communication lines of the second segment communication unit.

In one or more embodiments, at least one of the first segment communication unit and the second segment communication unit are configured to communicate with said main communication unit, to convey said information and said instructions, via a power line, wherein said power line comprises wiring that is configured to couple the plurality of battery cells to a load.

In one or more embodiments, at least one of the first segment communication unit and the second segment communication unit are configured to communicate with said main communication unit to convey said information and said instruction via a communication line separate from a power line that comprises wiring that couples the plurality of battery cells to a load.

In one or more embodiments, the first segment communication unit includes a second set of communication lines, separate from the first set of communication lines, to communicate with said main communication unit, wherein at least one communication line of the second set of communication lines is coupled to a first power line node of a power line, wherein said power line comprises wiring that is configured to couple the plurality of battery cells to a load.

In one or more embodiments, the second set of communication lines comprises a first communication line and a second communication line, wherein the first communication line comprises the at least one communication line coupled to the first power line node, wherein said second communication line is coupled to the second segment communication unit.

In one or more embodiments, the system includes an inductor between the first power line node and the first-group-positive node. The inductor may be provided, at least in part by a parasitic inductance.

In one or more embodiments, said second communication line is coupled to the second segment communication unit via the first-group-negative node.

In one or more embodiments, the system includes an inductor between the first-group-negative node and the second-group-positive node. The inductor may be provided, at least in part by a parasitic inductance.

In one or more embodiments, said information from each of a plurality of battery cells comprises one or more of:
state of charge information indicative of the state of charge of each battery cell;
voltage information indicative of the voltage across each battery cell;
current information indicative of one or both of a current into or out of each battery cell;
cell temperature information indicative of the temperature of each battery cell.

In one or more embodiments, said instructions generated by the control unit are configured to be addressed by the main communication unit such that each of said instructions is routed to the at least one battery charge controller associated with an individual cell via the segment communication unit of which the individual cell is part.

In one or more embodiments, each of the plurality of segment communication units are configured to, on receipt of one of said instructions from the control unit, determine whether or not the instruction is addressed to an individual battery cell of the cell group associated with the segment communication unit and, based on said determination being indicative that the individual battery cell of the cell group is associated with the segment communication unit, forward the instruction to the battery charge controller associated with said individual battery cell.

According to an aspect of the disclosure we provide an electrically powered vehicle or energy storage system including the battery management communication system of the first aspect.

While the disclosure is amenable to various modifications and alternative forms, specifics thereof have been shown by way of example in the drawings and will be described in detail. It should be understood, however, that other embodiments, beyond the particular embodiments described, are possible as well. All modifications, equivalents, and alternative embodiments falling within the spirit and scope of the appended claims are covered as well.

The above discussion is not intended to represent every example embodiment or every implementation within the scope of the current or future Claim sets. The figures and Detailed Description that follow also exemplify various example embodiments. Various example embodiments may be more completely understood in consideration of the following Detailed Description in connection with the accompanying Drawings.

### Brief Description of the Drawings

One or more embodiments will now be described by way of example only with reference to the accompanying drawings in which:
Figure 1 shows a first example embodiment of a battery system and a battery management communication system;
Figure 2 shows a second example embodiment of a battery system and a battery management communication system;
Figure 3 shows a third example embodiment of a battery system and a battery management communication system;
Figure 4 shows a fourth example embodiment of a battery system and a battery management communication system;
Figure 5 shows a vehicle including the battery management communication system;
Figure 6 shows an example battery charge controller; and
Figure 7 shows a fifth example embodiment of a battery system and a battery management communication system showing more detail of the battery charge controllers, the segment communication units and the main communication unit.

### Detailed Description

In the present description, a battery management system comprises a system that manages a plurality of batteries, such as a plurality of secondary electrochemical battery cells. The battery management system typically comprises a control unit, such as a microcontroller configured to collectively and/or individually manage the plurality of batteries. The management of the batteries may include ensuring that one or more of the battery cells operate within their predetermined, safe operating parameters. Further, the management may include obtaining information from the plurality of battery cells, such as state of charge information indicative of the state of charge of each battery cell or a set of the cells; voltage information indicative of the voltage across each battery cell or a set of the cells; current information indicative of one or both of a current into or out of each or the set of battery cells; cell temperature information indicative of the temperature of each battery cell or a set of the cells. In further examples, the information may include the temperature or flow rate of coolant configured to control the temperature of the battery cells.

A battery management system requires a communication system or "network" to be able to receive information from the cells and to send instructions to provide for control of the cells and/or coolant system. The disclosure that follows relates to examples of the communication system for a battery management system. Thus, the examples of the battery management communication system may comprises network infrastructure for coupling to battery modules (or more generally groups of cells, that may or may not form a single module), wherein each battery module may include a plurality of individual battery cells. The battery cells of a module may be configured in different ways, which will be explained in the examples that follow.

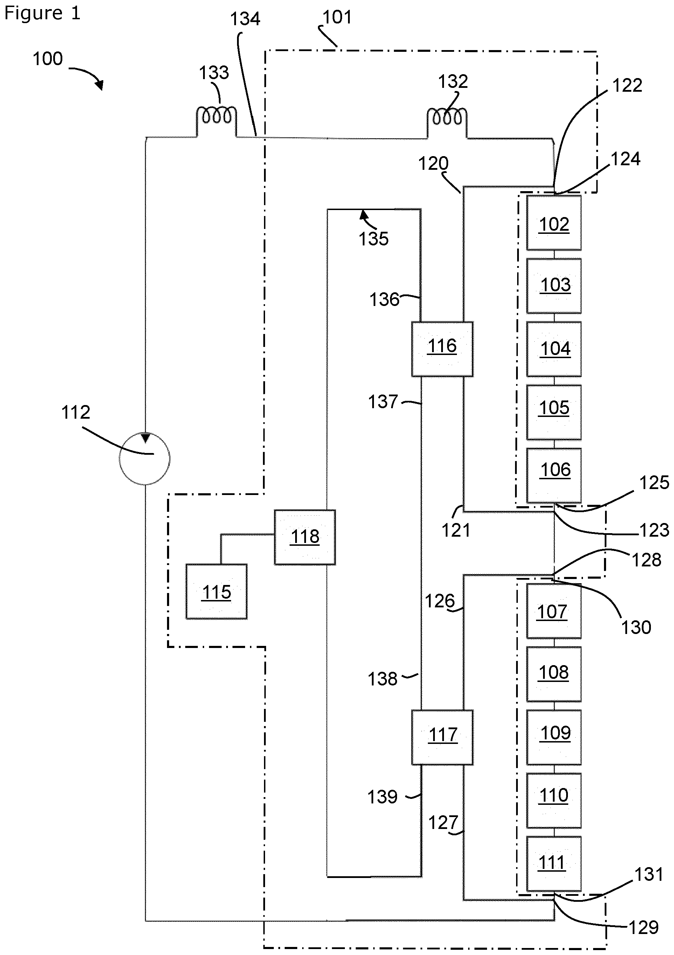

Figure 1 shows a battery system 100 and a battery management communication system 101. The battery management communication system 101 is configured to receive a plurality of battery cells 102-111, which are configured to provide power to a load 112. The plurality of battery cells 102-111 of the examples herein are coupled in series, although different configurations are possible, such as a combination of series and parallel connected cells. The load 112 may comprise a motor, such as a motor of an electric vehicle, although the battery management (BMS) communication system 101 has application in other contexts. For example, a battery energy storage system may provide power for a variety of different loads and the BMS communication system may manage the batteries thereof. A battery energy storage system may include a fuel cell and may therefore comprise a hybrid fuel cell-battery energy storage system. As a further example, the cells themselves may comprise fuel cells and the BMS communication system may manage communication for the fuel cell based battery cells..

Known battery management communication systems are costly because they typically require numerous connections and voltage isolation components.

In example figure 1, the battery management communication system 101 comprises a control unit 115, which may be known as a microcontroller unit or MCU. The control unit 115 provides for individual control of the plurality of battery cells 102-111 to provide for management of the battery system 100. In other examples, the control unit 115 may not form part of the battery management communication system 101 and instead the battery management communication system 101 may include an interface that allows a control unit 115 to be coupled thereto.

Accordingly, the control unit 115 is configured to receive information from each of a plurality of battery cells 102-111, when said battery cells are coupled to the battery management communication system 101. The control unit 115 is further configured to generate instructions to control, e.g. individually control, one or more or all of the plurality of battery cells 102-111. The control unit 115 may control the battery cells 102-111 based on a predetermined procedure or in response to the information received from the battery cells. For example, if one cell of the plurality of cells is outputting a much higher voltage than the others, the control unit 115 may be configured to sent an instruction to partially discharge the one cell to balance the plurality of series-connected cells 102-111. It will be appreciated that other control processes are possible.

The battery management communication system 101 further comprises a plurality of segment communication units. Thus, in the present examples, the battery management communication system 101 splits the series connected plurality of cells 102-111 into groups or segments. In the present example, the plurality of battery cells in each group or segment are arranged contiguously with one another. In other examples, there may be overlap between the groups or have a different configuration. The battery management communication system 101 may split the plurality of series-connected battery cells into any number of groups, but typically there is at least two cells 102-111 in each group. Each group has one of the segment communication units configured to provide communication functionality for the battery cells in that group.

In the example of Figure 1, the plurality of cells 102-111 are shown divided into a first cell group 102-106 and a second cell group 107-111. Accordingly, the system 101, in this example, comprises a first segment communication unit 116 and a second segment communication unit 117.

The first segment communication unit 116 is configured to provide for communication between the control unit 115 and the first cell group 102-106 by the forwarding of information and instructions. As will be familiar to those skilled in the art, the entity for collecting information from a battery cell and for proving control of the cell during discharging or charging is termed a battery charge controller (BCC). The term "battery charge controller" is therefore used to designate a controller that can control the charge of the cell and/or provide one or more other functions, such as measuring electrical parameters of the cell, as indicated herein.

The battery charge controller(s) can be configured and arranged with the battery cells in different ways. The different embodiments herein will show those different ways. However, in the example of figure 1, each battery cell 102-111 includes an integrated battery charge controller (not shown separately from the cell). The battery charge controllers may be configured to collect or measure information such as voltage, current, temperature measurements obtained, such as using one or more sensors or circuitry, of the battery cell with which it is integrated.

The first segment communication unit 116 is configured to receive the information from each of the battery charge controllers of each of the cells 102-106 in the first group. Further, in this example, the first segment communication unit 116 is configured to provide the instructions, such as instructions to change the state of charge of a cell, to at least one of the battery charge controllers of the cells in the first group. It will be appreciated that the battery charge controller, upon receipt of said instructions, may be configured to individually control the charge of, and/or collect said information from, said plurality of battery cells 102-106 in the first cell group.

Likewise, the second segment communication unit 117 is configured to receive the information such as voltage, current, temperature measurements from one or more sensors of each of the battery charge controllers of each of the cells 107-111 in the second group. Further, in this example, the second segment communication unit 117 is configured to provide the instructions, such as instructions to change the state of charge of a cell, to at least one of the battery charge controllers. It will be appreciated that the battery charge controllers, upon receipt of said instructions, may be configured to individually control the charge of, and/or collect said information from, said plurality of battery cells 107-111 in the second cell group.

The battery management communication system 101 further comprises a main communication unit 118 configured to couple to the control unit 115 and the plurality of segment communication units 116, 117. Thus, the main communication unit 118 may be configured to provide a communication interface between the control unit 115 and the segment communication units 116, 117. In other examples, not shown, there may be a further "layer" of multi-segment communication units. A multi-segment communication unit may comprise an entity that provides communication functionality between the main communication unit and a plurality of segment communication units 116, 117.

In terms of the routing of information communications, in the present example, said information from each of the plurality of battery cells 102-111 is configured to be received by the control unit 115:
from the at least one battery charge controller (integrated with each cell in this example) of the first cell group 102-106 via the first segment communication unit and the main communication unit 118; and
from the at least one battery charge controller (integrated with each cell in this example) of the second cell group 107-111 via the second segment communication unit 117 and the main communication unit 118.

Likewise, in terms of routing of instructions, in the present example said instructions are configured to be generated by the control unit 115 are:
provided to the at least one battery charge controller of the first cell group 102-106 via the main communication unit 118 and the first segment communication unit 116; and
provided to the at least one battery charge controller of the second cell group 107-111 via the main communication unit 118 and the second segment communication unit 117.

Further it will be appreciated that the dividing of the communication function into at least the first cell group and second cell group means that the segment communication units only provide communication functionality for the cells 102-106, 107-111 in the group with which they are associated. This may, in one or more examples, improve the signal to noise ratio and/or allow greater flexibility with bitrate. These advantages may be realised by the system having smaller parasitic inductance and capacitance and the communication may be provided over shorter cable lengths.

The configuration of the battery management communication system 101, in one or more examples, has been found to be advantageous. The construction of the battery management communication system 101 may be less complex. Further, the provision of the communication function for a plurality of cells by the segment communication units, separate from the battery charge controllers, may allow for flexible construction of the battery pack of which the system 101 forms part. It may also reduce the number of connections between the battery cells and the main controller 118.

We now turn to the connection between the segment communication unit(s) and each groups of cells. The first segment communication unit 116 includes a first set of communication lines 120, 121 to communicate with the plurality of battery charge controllers that are integrated with the cells 102-106 of the first group. In the present example, the communication lines 120, 121 comprise two lines, but in other examples a different number of lines may be provided. A first line 120 of the first set of communication lines is coupled to a first-group-positive node 122. A second line 121 of the first set of communication lines is coupled to a first-group-negative node 123. The first-group-positive node 122 and the first-group-negative node 123 comprise terminals that receive the first group of series-connected battery cells 102-106. Thus, first-group-positive node 122 is configured to couple to a positive power output terminal 124 of the first group of battery cells 102-106. Further, the first-group-negative node 123 is configured to couple to a negative power output terminal 125 of the first group of battery cells 102-106 when the cells are coupled to the communication system and/or the load 112.

Likewise, the second segment communication unit 117 includes a first set of communication lines 126, 127 to communicate with the plurality of battery charge controller of the second group 107-111. The first 126 and second 127 lines of the first set of communication lines are configured to couple, respectively, to a second-group-positive node 128 and a second-group-negative node 129. The second-group-positive node 128 is configured to couple to a positive power output terminal 130 of the second group of battery cells 107-111 and wherein the second-group-negative node 129 is configured to couple to a negative power output terminal 131 of the second group of battery cells.

It will be appreciated that the power output terminals 124, 125, 130, 131 of the series connected plurality of cells are at opposite ends of the series connected group of cells. Thus, for completeness, the first group of battery cells 102-106 comprises a series connected set of contiguous cells, and the positive power output terminal 124 is located at a first end of the first group and the negative power output terminal 125 is located at a second, opposite end of the first group. Likewise, the second group of battery cells 107-111 comprises a series connected set of contiguous cells, and the positive power output terminal 130 is located at a first end of the second group and the negative power output terminal 131 is located at a second, opposite end of the second group.

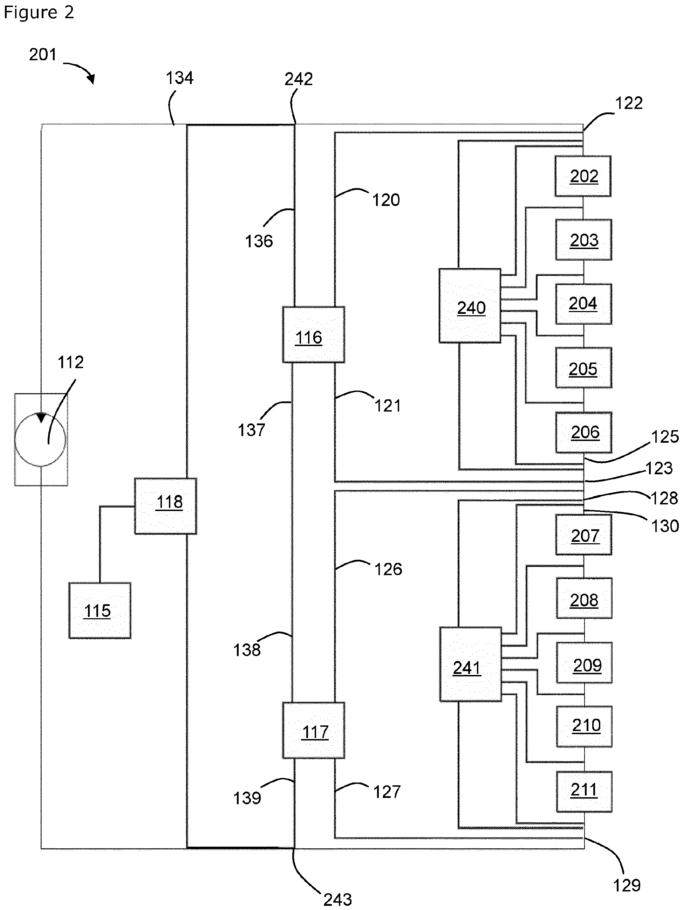

In the example of figure 2, the first segment communication unit 116 is configured to communicate with said plurality of battery charge controllers via the first set of communication lines 120, 121 using a powerline communication technique. Likewise, the second segment communication unit 117 is configured to communicate with said plurality of battery charge controllers via the first set of communication lines 126, 127. However, it will be appreciated that the different segment communication units 116, 117 do not necessary have to use the same communication arrangement as each other.

Power line communication may be advantageous because it allows for communication by use of, and connection to, the same lines than carry the power from the cells 102-111 to the load 112. Thus, the battery charge controllers integrated with each cell 102-106 in the first group may provide the information derived from the cell (e.g. its voltage, current output or current input among other information) via the series connected power lines that interconnect the group of cells to a "local" first segment communication unit 116. As the first segment communication unit 116 is one of a plurality of segment communication units providing communication functionality for a series-connected set of cells, that is cells 102-111, communication with the "local" first segment communication unit 116 may be more reliable. A similar advantage may be realised for the second group of cells 107-111 communicating with their "local" second segment communication unit 117.

Within the first group 102-106 (and equally the second group 107-111) the system 101 provides for communication over a relatively short distance between the segment communication units 116, 117 and battery charge controllers. Accordingly, the attenuation (which may be due to parasitic capacitance and/or inductance) and the noise within the groups 102-106; 107-111 are lower, and thus, the bitrate may be increased and/or the bit-error-rate (BER) can be decreased.

The serving of communication functionality by the segment communication units 116, 117 with reduced BER and/or attenuation allows for signal power division for sending the information and instructions. Thus, the longer path through other groups, e.g. a signal generated by the battery charge controller of cell 102 passing through to cell 111 and beyond to the control unit 115 is, relatively, highly attenuated. That is the case because the impedance between the small group 102-106; 107-111 served by the segment communication unit 116; 117 is much smaller than the sum of impedances of the remaining cells 102-111 around them. Then, the current that provides the communication signal through the group/segment communication unit is larger than the current through the remaining system and thus the signal level within the group/segment communication unit is higher. The more segments we have in the system, the higher the attenuation and thus the effective resistance between the segments to cross talk. E.g. if we have ten segments in the structure, then the communication between a battery charge controller and the segment communication unit in the same cell group has an amplitude of only about 1/10 in other segments - or even less, if there are additional parasitic inductances in the power line. An inductor coil, such as 132, 133, which may be provided as a parasitic inductance, can improve the ratio further, as will be shown in later example embodiments.

Both effects lead to higher data rates for each individual group/segment communication unit compared to the provision of communication without the cell groups/segments. In addition, the communication in different segments may be time-independent and therefore parallel in each segment, if the modulation scheme allows for separation, like with different frequencies, codes, etc.

The physical layer communication between the first and second segment communication units 116, 117 and the main communication unit 118 may vary between embodiments. In general, the communication between the first and second segment communication units 116, 117 and the main communication unit 118 may be implemented as powerline communication using the wiring between the cells 102-111 and the load 112 or a dedicated line for communication may be provided.

In the present example of Figure 1, both the first segment communication unit and the second segment communication unit are configured to communicate with said main communication unit to convey said information and said instruction via a communication line 135 separate from the power line 134 that comprises wiring that couples the plurality of battery cells 102-111 to the load 112.

Thus, the first segment communication unit 116 includes a second set of communication lines 136, 137, separate from the first set of communication lines 120, 121, to communicate with said main communication unit 118. Likewise, the second communication unit 117 includes a second set of communication lines 138, 139, separate from the first set of communication lines 126, 127, to communicate with said main communication unit 118. In this example the lines 137 and 138 are coupled together, although in other examples, they may provide separate paths to the main communication unit 118.

The coupling of the first segment communication unit 116, second communication unit 117 and main communication unit 118 in a loop may provide a current-signal based communication network separate from the power line 134, which may be subject to less noise.

Figure 2 shows a second example embodiment that has many parts in common with example Figure 1. The same reference numerals have been used for like parts. The differences will now be described.

In this example, the battery cells 202-211 do not have, or only partially have, a battery charge controller integrated therein. Instead, the first group of battery cells 202-206 share a first-group battery charge controller 240. The second group of battery cells 207-211 share a second-group battery charge controller 241. Thus, the first segment communication unit 116 still includes the first set of communication lines 120, 121 which couple to the power line, but they are provided to communicate with the single, shared first-group battery charge controller 240. Likewise, the second segment communication unit 117 still includes the first set of communication lines 126, 127 which couple to the power line, but they are provided to communicate with the single, shared second-group battery charge controller 241.

A further difference in example figure 2, is that the communication between the first and second segment communication units 116, 117 and the main communication unit 118 is via power line. Thus, both (although it need not be both) the first segment communication unit 116 and the second segment communication unit 117 are configured to communicate with said main communication unit 118 via the power line 134.

Accordingly, in this example and with reference to the first segment communication unit 116, the second set of communication lines 136, 137 provide for communicate with said main communication unit 118 and at least one communication line 136 of the second set of communication lines is coupled to a first power line node 242 of the power line 134. With reference to the second segment communication unit 117, the second set of communication lines 138, 139 provide for communicate with said main communication unit 118 and at least one communication line 139 of the second set of communication lines is coupled to a second power line node 243 of the power line 134. If further segment communications units were provided intermediate the first and second communication units, then their second set of communication lines may be configured to couple to the second set of communication lines of an adjacent segment communications unit in a chain of segment communications units.

In the present example, the second communication line 137 of the second set of communication lines is coupled to the second segment communication unit 117. Likewise the first communication line 138 of the second set of communication lines of the second segment communication unit 117 is coupled to the first segment communication unit 116. Thus, the system 201 provides a bus-based communication between the main communication unit 118 and the segment communication units 116, 117.

Thus, a battery communication system 101, 201 of the present disclosure may be configured to provide communication for a single, shared BCC or an implementation where the BCCs are integrated into the cells. Independently, the communication between the segment communication units 116, 117 and the main communication unit 118 may be via power line or dedicated communication lines.

In this example or other examples, the inductor 132 (not shown in Figure 2) may be located between the first power line node 242 and the first-group-positive node 122. In a different example, the inductor 132 may be located between the second power line node 243 and the second-group-negative node 129. In some examples, the inductor 132 may not be necessary.

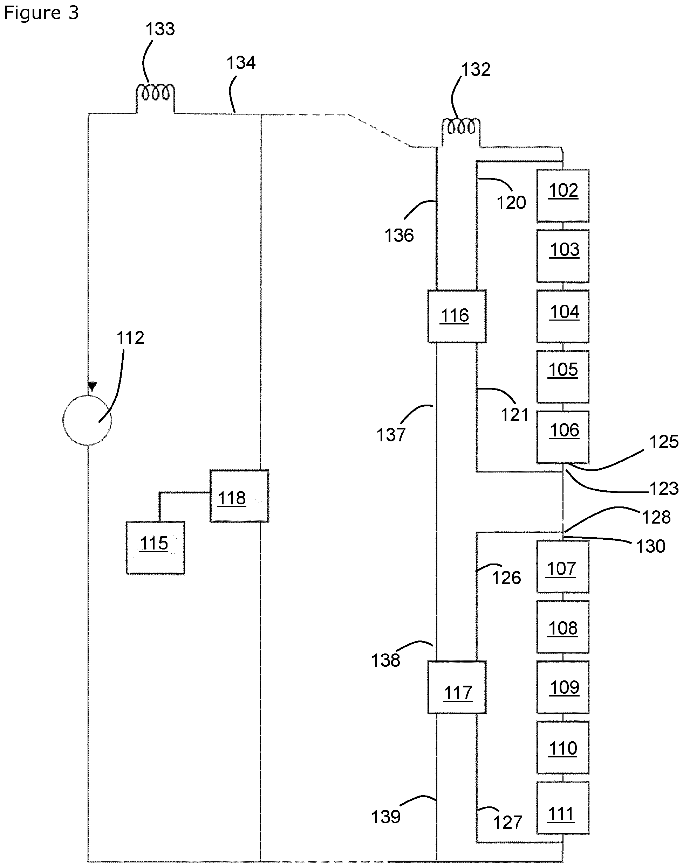

Example figure 3 shows the inductor 132. The BCCs are integrated with the cells 102-111 and therefore the segment communication units 116, 117 are configured to communicate with them via the first set of communication lines 120, 121 and 126, 127, similar to example figure 1. However, in this example, similar to example figure 2, the communication between the segment communication units 116, 117 and the main communication unit 118 is via powerline.

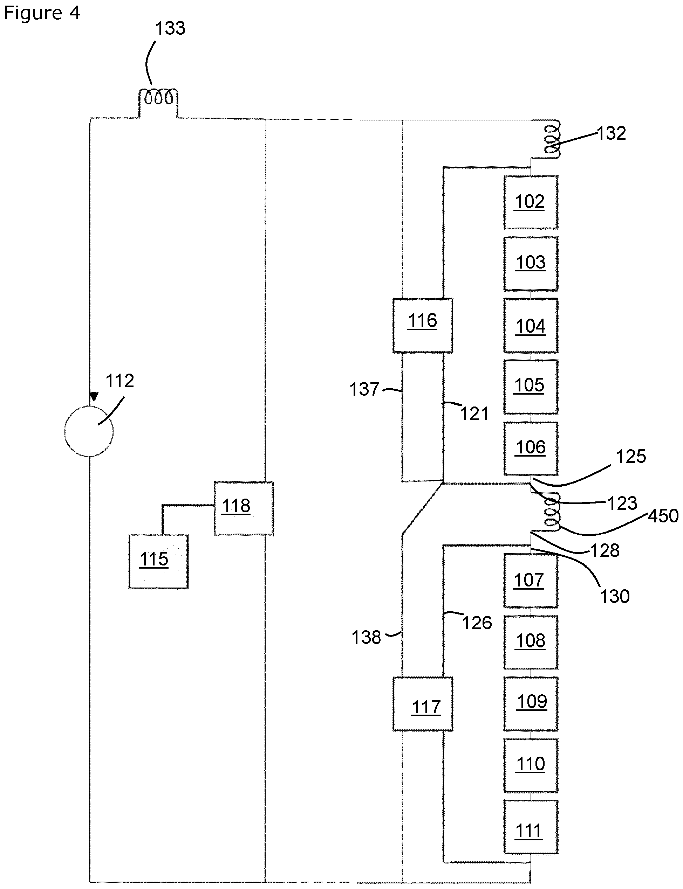

Example figure 4 shows a still further example. In this example, inductor 132 is present. In addition, in some but not all examples, the system includes an inductor 450 between the first-group-negative node 125 and the second-group-positive node 130. The inductor 450 is configured to help separate the communication in the first group of cells with the first segment communication unit 116 from the communication in the second group of cells with the second segment communication unit 117. That is the inductor 450 acts to reduce inter-group cross talk.

Further, the example figure 4 shows an additional coupling provided between the second communication line 137 of the second set of communication lines of the first segment communication unit and the first-group-negative node 123.

In general, the system, including communication units 116, 117, 118, provides for communication between BCCs and the control unit 115. Thus, instructions generated by the control unit 115 are configured to be addressed by the main communication unit 118 such that each of said instructions is routed to the at least one battery charge controller associated with an individual cell 102-111 or 202-211 via the segment communication unit of which the individual cell is part. The segment communication units 116, 117 are configured to, on receipt of one of said instructions from the control unit 116, determine whether or not the instruction is addressed to an individual battery cell of the cell group, e.g. a cell of first group 102-106 or a cell of second group 107-111, associated with the segment communication unit 116, 117. Based on said determination being indicative that the individual battery cell of the cell group is associated with the segment communication unit (that is part of the group of cells the segment communication unit provides communication for), forward the instruction to the battery charge controller associated with said individual battery cell.

Similarly, for information generated or obtained by a BCC, the segment communication units 116, 117 are configured to route the information to the main communication unit 118 and on to the control unit 115

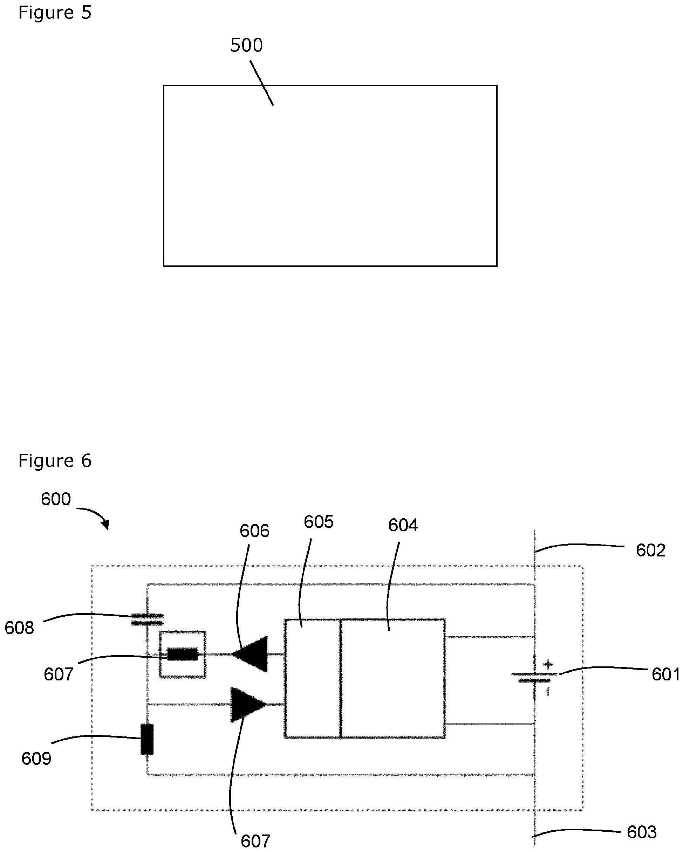

Figure 5 shows an electrically powered vehicle 500 including the battery management communication system 101, 201 of any of the examples above.

Figure 6 shows an example coupling circuit 600, such as would be included in a BCC that is integrated with a cell. It will be appreciated that the coupling circuit 600 is only an example and the disclosure is not limited to BCCs having such a structure. Figure 6 shows the battery cell 601 and the positive and negative terminals 602, 603 that couple to the next cell in the series connected set and/or the terminals of the communication system 122, 123, 128, 129. The circuit 600 includes a measurement and charge control element 604 that receives power from the battery and can control the charge of the battery cell 601 and measure electrical parameters. A transmitter/receiver module 605 provides the information and receives the instructions via a TX-path 606 and an RX-path 607 respectively. The TX-path and RX-path may include amplifiers. The TX-path 606 provides signalling to the powerline via terminals 602, 603 and via a resistor 607 and coupling capacitor 608. The RX-path receives the instructions via terminals 602, 603 and via receive resistor 609. The coupling capacitor 608 may act to separate the communication from DC voltage levels.

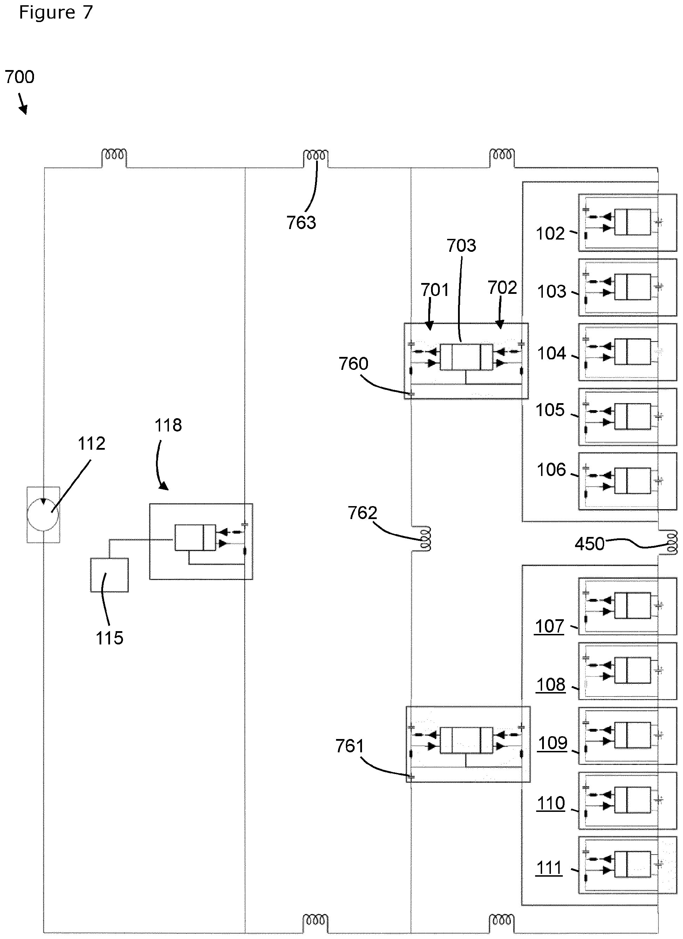

Example Figure 7 shows a further example system 700.

The segment communication units 116, 117 may comprise two separate transceivers 701, 702 with separate communication paths, coupling capacitors and resistors for transmission and reception. The communication units may include a logic module 703 between the transceivers that provides the communication function for forwarding instructions (or more generally messages). In one or more examples, the segment communication units or logic module 703 thereof may be configured to combine the information obtained from a plurality of BCCs in the group into a single message to transmit to the control unit 115 via the main communication unit 118.

The main communication unit 118 provides a gateway to the control unit 115. The interface between the main communication unit 118 and the control unit 115 may be any interface, such as Serial Peripheral Interface (SPI) or Controller Area Network (CAN) interface, etc.

As can be appreciated by those skilled in the art, at a BCC, the voltage that is experienced by the components therein is the battery voltage. However, at the segment communication unit the voltage experienced may comprise the voltage of the groups of series connected plurality of battery cells. For the main communication unit 118 there is the total voltage of the plurality of battery cells.

In one or more examples, the segment communication units 116, 117 may use a current driven communication.

The additional coupling capacitors 760 and 761 are optional.

The inductors shown in figure 7 may include or represent the inductances of the wires. The value of the inductors therefore depends on the lengths and geometries of the wires, but also on the position of the battery cells and BCCs and the corresponding segment communication units.

For example, if the system is configured such that the battery cells and their BCCs are arranged in a U-shape and the segment communication units are connected closely to the ends of the U-shape, then the inductance for the communication between the BCC and its associated segment communication units can be optimized. If these U-shapes are arranged in an appropriate way, the connections between repeaters can be very short, thus minimizing the size of inductor 762.

Inductor 763 will thus be the main inductance in the communication path between segment communication units and the main communication unit 118. Since the majority of communication is from the segment communication units to the main communication unit, the receiver circuitry in the main communication unit may need to be the most complex to extract effectively the communication signal from power line. The receiver circuitry in the segment communication units can be simpler than in the main communication unit, because the expected noise and attenuation of the signal from the BCCs is less. Nevertheless, the same receiver as in the main communication unit could also be used, of course, in the segment communication units.

In any of the examples, the segment communication units may be configured to provide for one or more of pre-processing and/or data compaction to decrease the amount of data in the communication to the control unit 115.

In one or more examples, the control unit 115 may be configured to communicate with BCCs directly or via the segment communication units. Since the amount of data is mainly in the direction from the BCCs to the control unit 115 (such as via the segment communication units), the control unit 116 and also the segment communication units in direction to the BCCs can implement a lower bitrate for transmission, thus simplifying the demodulation effort in the BCCs. On the other hand, the data volume from BCC to the segment communication units and from segment communication units to the control unit is high. Therefore, a higher bitrate needs and/or more sophisticated modulation schemes may be required.

In one or more examples, the segment communication units 116, 117 acts as repeaters and may be configured to forward the information from the BCCs as one or more messages. In other examples, the segment communication units may act as gateways and the segment communication units may provide for implementation of a change in communication protocol between the BCCs and the segment communication units versus between the segment communication units and the main communication unit. In one or more examples, the segment communication units 116, 117 provide for data compression of the information to be forwarded to the main communication unit and/or data de-compression for the instructions from the main communication unit.

The battery cells of the above examples may comprise electrochemical secondary cells. However, the battery cells could be fuel cells in which energy is stored in the form of hydrogen, for example. Thus, in the present application, the battery cell described should be understood as energy storage cells and include electrochemical battery cells and fuel cells.

The communication system 101, 201 described herein may allow the segment communication units and main communication unit to use standard chip technologies rather than costly high voltage processes. Further, the system may reduce the need for high voltage isolation techniques, e.g. using transformers. Thus, in one or more examples, the communication system is absent one or transformers.

It will also be appreciated that examples in which both power line communication and dedicated line communication are used between the various communication units is within the scope of the disclosure. In addition, an example system may include integrated BCCs as well as shared BCCs.

The term processor includes microprocessors, microcontrollers, processor modules or subsystems (including one or more microprocessors or microcontrollers), or other control or computing devices. A processor can refer to a single component or to plural components.

In other examples, the set of instructions/methods illustrated herein and data and instructions associated therewith are stored in respective storage devices, which are implemented as one or more non-transient machine or computer-readable or computer-usable storage media or mediums. Such computer-readable or computer usable storage medium or media is (are) considered to be part of an article (or article of manufacture). An article or article of manufacture can refer to any manufactured single component or multiple components. The non-transient machine or computer usable media or mediums as defined herein excludes signals, but such media or mediums may be capable of receiving and processing information from signals and/or other transient mediums.

Example embodiments of the material discussed in this specification can be implemented in whole or in part through network, computer, or data based devices and/or services. These may include cloud, internet, intranet, mobile, desktop, processor, look-up table, microcontroller, consumer equipment, infrastructure, or other enabling devices and services. As may be used herein and in the claims, the following non-exclusive definitions are provided.

In one example, one or more instructions or steps discussed herein are automated. The terms automated or automatically (and like variations thereof) mean controlled operation of an apparatus, system, and/or process using computers and/or mechanical/electrical devices without the necessity of human intervention, observation, effort and/or decision.

It will be appreciated that any components said to be coupled may be coupled or connected either directly or indirectly. In the case of indirect coupling, additional components may be located between the two components that are said to be coupled.

In this specification, example embodiments have been presented in terms of a selected set of details. However, a person of ordinary skill in the art would understand that many other example embodiments may be practiced which include a different selected set of these details. It is intended that the following claims cover all possible example embodiments.

## Claims

1. A battery management communication system comprising:
a control unit configured to receive information from each of a plurality of battery cells, the battery cells configured to be coupled together in series, and wherein the control unit is further configured to generate instructions to control the plurality of battery cells;
a plurality of segment communication units comprising at least a first segment communication unit and a second segment communication unit;
wherein the first segment communication unit is configured to provide for communication between the control unit and a first cell group, the first cell group comprising two or more of the plurality of battery cells and wherein the first segment communication unit is configured to receive the information from and provide the instructions to at least one battery charge controller configured to individually control the charge of, and collect said information from, said two or more of the plurality of battery cells in the first cell group; and
wherein the second segment communication unit is configured to provide for communication between the control unit and a second cell group, the second cell group comprising two or more of the plurality of battery cells different to those of the first cell group and wherein the first segment communication unit is configured to receive the information from and provide the instructions to at least one battery charge controller configured to individually control the charge of, and collect said information from, said two or more of the plurality of battery cells in the second cell group; and
a main communication unit configured to couple to the control unit and the plurality of segment communication units;
wherein said information from each of a plurality of battery cells is configured to be received by the control unit:
from the at least one battery charge controller of the first cell group via the first segment communication unit and the main communication unit; and
from the at least one battery charge controller of the second cell group via the second segment communication unit and the main communication unit; and
wherein said instructions configured to be generated by the control unit are:
provided to the at least one battery charge controller of the first cell group via the main communication unit and the first segment communication unit; and
provided to the at least one battery charge controller of the second cell group via the main communication unit and the second segment communication unit.

2. The battery management communication system of claim 1,
wherein the first segment communication unit includes a first set of communication lines to communicate with said at least one battery charge controller of the first group, said first set of communication lines coupled, respectively, to a first-group-positive node and a first-group-negative node, wherein the first-group-positive node is configured to couple to a positive power output terminal of the first group of battery cells and wherein the first-group-negative node is configured to couple to a negative power output terminal of the first group of battery cells; and
wherein the second segment communication unit includes a first set of communication lines to communicate with said at least one battery charge controller of the second group, said first set of communication lines configured to couple, respectively, to a second-group-positive node and a second-group-negative node, wherein the second-group-positive node is configured to couple to a positive power output terminal of the second group of battery cells and wherein the second-group-negative node is configured to couple to a negative power output terminal of the second group of battery cells.

3. The battery management communication system of claim 2,
wherein the at least one battery charge controller of the first group comprises a plurality of battery charge controllers, each of which being integrated with a respective one of the battery cells of the first group, and wherein the first segment communication unit is configured to communicate with said plurality of battery charge controllers via the first set of communication lines;
wherein the at least one battery charge controller of the second group comprises a plurality of battery charge controllers, each of which being integrated with a respective one of the battery cells of the second group, and wherein the second segment communication unit is configured to communicate with said plurality of battery charge controllers via the first set of communication lines.

4. The battery management communication system of claim 2,
wherein the at least one battery charge controller of the first group comprises a single battery charge controller having connections to positive and negative terminals of each of the battery cells of the first group; and
wherein the at least one battery charge controller of the second group comprises a single battery charge controller having connections to positive and negative terminals of each of the battery cells of the second group; and
wherein communication between the single battery charge controller of the first group and the first segment communication unit is via said first set of communication lines of the first segment communication unit; and
wherein communication between the single battery charge controller of the second group and the second segment communication unit is via said first set of communication lines of the second segment communication unit.

5. The battery management communication system of claim 1, wherein at least one of the first segment communication unit and the second segment communication unit are configured to communicate with said main communication unit, to convey said information and said instructions, via a power line, wherein said power line comprises wiring that is configured to couple the plurality of battery cells to a load.

6. The battery management communication system of claim 1, wherein at least one of the first segment communication unit and the second segment communication unit are configured to communicate with said main communication unit to convey said information and said instruction via a communication line separate from a power line that comprises wiring that couples the plurality of battery cells to a load.

7. The battery management communication system of claim 2, wherein
the first segment communication unit includes a second set of communication lines, separate from the first set of communication lines, to communicate with said main communication unit, wherein at least one communication line of the second set of communication lines is coupled to a first power line node of a power line, wherein said power line comprises wiring that is configured to couple the plurality of battery cells to a load.

8. The battery management communication system of claim 7, wherein
the second set of communication lines comprises a first communication line and a second communication line, wherein the first communication line comprises the at least one communication line coupled to the first power line node, wherein said second communication line is coupled to the second segment communication unit.

9. The battery management communication system of claim 8, wherein the system includes an inductor between the first power line node and the first-group-positive node.

10. The battery management communication system of claim 8, wherein said second communication line is coupled to the second segment communication unit via the first-group-negative node.

11. The battery management communication system of claim 8, wherein the system includes an inductor between the first-group-negative node and the second-group-positive node.

12. The battery management communication system of any preceding claims, wherein said information from each of a plurality of battery cells comprises one or more of:
state of charge information indicative of the state of charge of each battery cell;
voltage information indicative of the voltage across each battery cell;
current information indicative of one or both of a current into or out of each battery cell;
cell temperature information indicative of the temperature of each battery cell.

13. The battery management communication system of any preceding claims, wherein said instructions generated by the control unit are configured to be addressed by the main communication unit such that each of said instructions is routed to the at least one battery charge controller associated with an individual cell via the segment communication unit of which the individual cell is part.

14. The battery management communication system of claim 13, wherein each of the plurality of segment communication units are configured to, on receipt of one of said instructions from the control unit, determine whether or not the instruction is addressed to an individual battery cell of the cell group associated with the segment communication unit and, based on said determination being indicative that the individual battery cell of the cell group is associated with the segment communication unit, forward the instruction to the battery charge controller associated with said individual battery cell.

15. A electrically powered vehicle or energy storage system including the battery management communication system of any preceding claim.

## Amended claims

### Amended claims in accordance with Rule 137(2) EPC.

1. A battery management communication system (101) comprising:
a control unit (115) configured to receive information from each of a plurality of battery cells (102 - 111), the battery cells configured to be coupled together in series, and wherein the control unit is further configured to generate instructions to control the plurality of battery cells;
a plurality of segment communication units (116, 117) comprising at least a first segment communication unit (116) and a second segment communication unit (117);
wherein the first segment communication unit is configured to provide for communication between the control unit and a first cell group, the first cell group comprising two or more of the plurality of battery cells (102 - 106) and wherein the first segment communication unit is configured to receive the information from and provide the instructions to at least one battery charge controller configured to individually control the charge of, and collect said information from, said two or more of the plurality of battery cells in the first cell group; and
wherein the second segment communication unit is configured to provide for communication between the control unit and a second cell group, the second cell group comprising two or more of the plurality of battery cells (107 - 111) different to those of the first cell group and wherein the second segment communication unit is configured to receive the information from and provide the instructions to at least one battery charge controller configured to individually control the charge of, and collect said information from, said two or more of the plurality of battery cells in the second cell group; and
a main communication unit (118) configured to couple to the control unit and the plurality of segment communication units;
wherein said information from each of a plurality of battery cells is configured to be received by the control unit:
from the at least one battery charge controller of the first cell group via the first segment communication unit and the main communication unit; and
from the at least one battery charge controller of the second cell group via the second segment communication unit and the main communication unit; and
wherein said instructions configured to be generated by the control unit are:
provided to the at least one battery charge controller of the first cell group via the main communication unit and the first segment communication unit; and
provided to the at least one battery charge controller of the second cell group via the main communication unit and the second segment communication unit;
wherein the first segment communication unit includes a first set of communication lines (120, 121) to communicate with said at least one battery charge controller of the first group, said first set of communication lines coupled, respectively, to a first-group-positive node (122) and a first-group-negative node (123), wherein the first-group-positive node is configured to couple to a positive power output terminal (124) of the first group of battery cells and wherein the first-group-negative node is configured to couple to a negative power output terminal (125) of the first group of battery cells;
wherein the second segment communication unit includes a first set of communication lines (126, 127) to communicate with said at least one battery charge controller of the second group, said first set of communication lines configured to couple, respectively, to a second-group-positive node (128) and a second-group-negative node (129), wherein the second-group-positive node is configured to couple to a positive power output terminal (130) of the second group of battery cells and wherein the second-group-negative node is configured to couple to a negative power output terminal (131) of the second group of battery cells; and
wherein the first segment communication unit includes a second set of communication lines (136, 137), separate from the first set of communication lines, to communicate with said main communication unit, wherein at least one communication line of the second set of communication lines is coupled to a first power line node (242) of a power line (134), wherein said power line comprises wiring that is configured to couple the plurality of battery cells to a load.

2. The battery management communication system of claim 1,
wherein the at least one battery charge controller of the first group comprises a plurality of battery charge controllers, each of which being integrated with a respective one of the battery cells of the first group, and wherein the first segment communication unit is configured to communicate with said plurality of battery charge controllers via the first set of communication lines;
wherein the at least one battery charge controller of the second group comprises a plurality of battery charge controllers, each of which being integrated with a respective one of the battery cells of the second group, and wherein the second segment communication unit is configured to communicate with said plurality of battery charge controllers via the first set of communication lines.

3. The battery management communication system of claim 1,
wherein the at least one battery charge controller of the first group comprises a single battery charge controller having connections to positive and negative terminals of each of the battery cells of the first group; and
wherein the at least one battery charge controller of the second group comprises a single battery charge controller having connections to positive and negative terminals of each of the battery cells of the second group; and
wherein communication between the single battery charge controller of the first group and the first segment communication unit is via said first set of communication lines of the first segment communication unit; and
wherein communication between the single battery charge controller of the second group and the second segment communication unit is via said first set of communication lines of the second segment communication unit.

4. The battery management communication system of claim 1, wherein at least one of the first segment communication unit and the second segment communication unit are configured to communicate with said main communication unit, to convey said information and said instructions, via a power line (134), wherein said power line comprises wiring that is configured to couple the plurality of battery cells to a load.

5. The battery management communication system of claim 1, wherein at least one of the first segment communication unit and the second segment communication unit are configured to communicate with said main communication unit to convey said information and said instruction via a communication line separate from a power line (134) that comprises wiring that couples the plurality of battery cells to a load.

6. The battery management communication system of claim 1, wherein
the second set of communication lines comprises a first communication line (136) and a second communication line (137), wherein the first communication line comprises the at least one communication line coupled to the first power line node, wherein said second communication line is coupled to the second segment communication unit.

7. The battery management communication system of claim 6, wherein the system includes an inductor (132) between the first power line node and the first-group-positive node.

8. The battery management communication system of claim 6, wherein said second communication line is coupled to the second segment communication unit via the first-group-negative node.

9. The battery management communication system of claim 6, wherein the system includes an inductor (450) between the first-group-negative node and the second-group-positive node.

10. The battery management communication system of any preceding claims, wherein said information from each of a plurality of battery cells comprises one or more of:
state of charge information indicative of the state of charge of each battery cell;
voltage information indicative of the voltage across each battery cell;
current information indicative of one or both of a current into or out of each battery cell;
cell temperature information indicative of the temperature of each battery cell.

11. The battery management communication system of any preceding claims, wherein said instructions generated by the control unit are configured to be addressed by the main communication unit such that each of said instructions is routed to the at least one battery charge controller associated with an individual cell via the segment communication unit of which the individual cell is part.

12. The battery management communication system of claim 11, wherein each of the plurality of segment communication units are configured to, on receipt of one of said instructions from the control unit, determine whether or not the instruction is addressed to an individual battery cell of the cell group associated with the segment communication unit and, based on said determination being indicative that the individual battery cell of the cell group is associated with the segment communication unit, forward the instruction to the battery charge controller associated with said individual battery cell.

13. A electrically powered vehicle or energy storage system including the battery management communication system of any preceding claim.
